# EUROPEAN PATENT APPLICATION

(11) **EP 4 831 115 A1**
(43) Date of publication of application: **28.10.2026**
(21) Application number: 24908029.2
(22) Date of filing: 17.12.2024
(51) Int. Cl.: C01B 17/36, H01M 10/0562

(54) **LITHIUM SULFIDE POWDER AND MANUFACTURING METHOD THEREOF**

(30) Priority: 18.12.2023 KR 20230185183
(71) Applicant: POSCO Holdings Inc., Pohang-si, Gyeongsangbuk-do 37859 (KR)
(72) Inventor: KO, Young-Seon, Pohang-si, Gyeongsangbuk-do 37859 (KR); KIM, Byoungju, Pohang-si, Gyeongsangbuk-do 37859 (KR); CHUNG, Garam, Pohang-si, Gyeongsangbuk-do 37859 (KR); SON, Young Geun, Pohang-si, Gyeongsangbuk-do 37859 (KR); PARK, Jung Kwan, Pohang-si, Gyeongsangbuk-do 37859 (KR)
(74) Representative: Pfenning, Meinig & Partner mbB
(86) International application number: PCT/KR2024/020536
(87) International publication number: WO 2025/135746

(57) **Abstract**

The lithium sulfide powder according to the present invention is a lithium sulfide powder including, based on 100 wt% of the entirety, Li₂O in an amount of 2 wt% or less, wherein an oxygen content in the lithium sulfide powder is 1 wt% or less, and a carbon content in the lithium sulfide powder is 0.15 wt% or less.

## Description

### [TECHNICAL FIELD]

The present invention relates to a lithium sulfide powder and a method for manufacturing the same.

### [BACKGROUND ART]

In the field of next-generation batteries, it is expected that mainstream technology development will focus on technology development for improving performance of currently commercialized lithium-ion batteries targeting electric vehicles, and technology development of all-solid-state batteries applicable to performance, safety, and large capacity. Among these, demand for technology development of all-solid-state batteries is increasing, which have advantages in safety, high energy density based on a bipolar structure, high output, temperature stability, and the like.

As a solid electrolyte used in an all-solid-state battery, sulfide-based electrolyte materials have advantages in ionic conductivity and cell performance. Lithium sulfide (Li₂S), which is a main material of such a sulfide-based electrolyte, is a core material of a solid electrolyte; however, due to the high difficulty of the manufacturing technology, it is difficult to achieve high quality, high purity, and mass production.

In general, lithium sulfide is manufactured by thermal reduction using a powder source having carbon, such as coke or artificial graphite, and a source having Li and S, such as lithium sulfate. In general, lithium sulfide thermally reduced in this manner is often mixed with carbon powder, which is a reducing agent, and therefore, in order to achieve high quality, lithium sulfide undergoes an extraction process using an organic solvent such as ethanol. Thereafter, a drying process is performed to remove the organic solvent.

At this time, heat treatment is performed to remove a residual solvent such as ethanol from the manufactured lithium sulfide dried material, and when ethanol and decomposition gases derived therefrom are not smoothly discharged during the heat treatment, surface soot occurs due to carbonization.

In order to suppress this, a large amount of argon gas is injected during the heat treatment process. However, when a large amount of argon gas is used, a problem somewhat occurs in that process costs increase.

Accordingly, there is a need to develop a method for manufacturing lithium sulfide powder capable of lowering process costs while suppressing carbonization.

### [DETAILED DESCRIPTION OF THE INVENTION]

### [Technical Problem]

The present invention is intended to provide a lithium sulfide powder having excellent whiteness and a low impurity content.

The present invention is intended to provide a method for manufacturing a lithium sulfide powder, which can reduce manufacturing process costs of the lithium sulfide powder by reducing the amount of argon gas used while suppressing carbonization, and can reduce impurities.

### [Technical Solution]

The present invention provides a lithium sulfide powder including, based on 100 wt% of the entirety, Li₂O in an amount of 2 wt% or less, wherein an oxygen content in the lithium sulfide powder is 1 wt% or less, and a carbon content in the lithium sulfide powder is 0.15 wt% or less.

In addition, the present invention provides a method for manufacturing a lithium sulfide powder, including: preparing a lithium sulfide precursor powder including ethanol in an amount of 60 wt% or less based on 100 wt% of the entirety; and heat-treating the lithium sulfide precursor powder under reduced pressure.

### [Advantageous Effects]

Lithium sulfide according to the present invention has advantages in that surface soot is small, whiteness is excellent, and an impurity content is low.

In addition, the method for manufacturing lithium sulfide powder according to the present invention has an advantage of reducing process costs by not using argon gas while suppressing carbonization. In addition, there is an advantage that lithium sulfide having excellent whiteness and a low impurity content can be easily manufactured.

### [BRIEF DESCRIPTION OF THE DRAWINGS]

FIG. 1 shows lithium sulfide powders manufactured according to Examples and Comparative Examples.
FIG. 2 shows XRD peaks of lithium sulfide powders manufactured according to Examples and Comparative Examples.

### [MODE FOR CARRYING OUT THE INVENTION]

Hereinafter, embodiments of the present invention will be described in detail. However, these are presented as examples, and the present invention is not limited thereby, and the present invention is defined only by the scope of the claims to be described below.

In the present invention, when a member is referred to as being positioned "on" another member, this includes not only a case in which the member is in direct contact with the other member but also a case in which another member is interposed between the two members.

In the present invention, when a part is referred to as "including" a certain component, this means that the part may further include another component, rather than excluding another component, unless specifically stated to the contrary.

### <Lithium Sulfide Powder>

One aspect of the present invention relates to a lithium sulfide powder including, based on 100 wt% of the entirety, Li₂O in an amount of 2 wt% or less, wherein an oxygen content in the lithium sulfide powder is 1 wt% or less, and a carbon content in the lithium sulfide powder is 0.15 wt% or less.

The lithium sulfide powder according to the present invention has an advantage in that an impurity content such as Li₂O is very low, and particularly the carbon content is low.

In another embodiment of the present invention, the Li₂O may be included in an amount of 1.5 wt% or less, specifically 1.0 wt% or less, and more specifically 0.8 wt% or less, based on 100 wt% of the entire lithium sulfide powder.

When the Li₂O is included within the above range, it is preferable because excellent performance can be imparted when the lithium sulfide powder is applied as a solid electrolyte.

The lithium sulfide powder may not contain impurities composed of other lithium compounds such as LiOH, Li₂SO₄, and Li₂CO₃, except for the Li₂O.

In another embodiment of the present invention, the oxygen content in the lithium sulfide powder may be 0.85 wt% or less, and more specifically 0.45 wt% or less.

Since the lithium sulfide powder according to the present invention has a low oxygen content in the lithium sulfide powder, it has an advantage of being useful as a solid electrolyte.

In another embodiment of the present invention, the carbon content in the lithium sulfide powder may be 0.12 wt% or less, specifically 0.11 wt% or less.

In the manufacturing process of the lithium sulfide powder according to the present invention, a phenomenon in which ethanol remaining in the lithium sulfide precursor powder and decomposition gases derived therefrom are carbonized is suppressed, and thus the carbon content is very low and whiteness is excellent, which is preferable.

Since the lithium sulfide powder according to the present invention has a low impurity content and excellent whiteness, it has an advantage of being usefully applicable as a battery material such as a sulfide-based solid electrolyte for a next-generation secondary battery and a lithium-sulfur battery.

### <Method for Manufacturing Lithium Sulfide Powder>

Another aspect of the present invention relates to a method for manufacturing a lithium sulfide powder, including: preparing a lithium sulfide precursor powder including ethanol in an amount of 60 wt% or less based on 100 wt% of the entirety; and heat-treating the lithium sulfide precursor powder under reduced pressure.

Since the method for manufacturing lithium sulfide powder according to the present invention includes heat-treating the lithium sulfide precursor powder under reduced pressure, byproduct gases generated during the heat treatment process can be quickly discharged, thereby suppressing carbonization. In addition, there is an advantage that the amount of argon gas used can be reduced.

The method for manufacturing lithium sulfide powder according to the present invention includes preparing a lithium sulfide precursor powder including ethanol in an amount of 60 wt% or less based on 100 wt% of the entirety.

The lithium sulfide precursor powder including ethanol may be obtained by mixing a pulverized carbon-based material with lithium sulfate powder or an aqueous solution, thermally reducing the mixture to obtain a thermally reduced product, and then extracting and drying the thermally reduced product, but is not limited thereto. At this time, in the process of obtaining the thermally reduced product, a slurry may be prepared by further adding a solvent (antisolvent), and then thermally reduced to obtain the thermally reduced product, but the present invention is not limited thereto.

Specifically, the ethanol may be a component derived from a solvent used in the process of obtaining the lithium sulfide precursor powder, and specifically may be a solvent used in the process of extracting the thermally reduced product.

In other words, the method for manufacturing lithium sulfide powder according to the present invention removes the remaining solvent by heat-treating the lithium sulfide precursor powder under reduced pressure.

In another embodiment of the present invention, in the preparing of the lithium sulfide precursor powder, a molar ratio of S/Li in the lithium sulfide precursor powder may be 0.46 to 0.49, preferably 0.47 to 0.48.

When the molar ratio of S/Li in the lithium sulfide precursor powder satisfies the above range, it is preferable because there is an advantage that the oxygen weight and carbon content of the manufactured lithium sulfide powder can be lowered.

The method for manufacturing lithium sulfide powder according to the present invention includes heat-treating the lithium sulfide precursor powder under reduced pressure.

In the present invention, since heat-treating the lithium sulfide precursor powder under reduced pressure is included, carbonization is suppressed even without using conventionally used argon gas, and thus there is an advantage that lithium sulfide powder having a low impurity content can be manufactured.

In another embodiment of the present invention, the step of heat-treating the lithium sulfide precursor powder under reduced pressure may be performed at a pressure of 10 to 25 mbar, preferably at a pressure of 13 to 23 mbar.

When the step of heat-treating the lithium sulfide powder under reduced pressure is performed under the above pressure, it is preferable because a phenomenon in which the cost of equipment increases and economic feasibility of the manufacturing process decreases can be suppressed, while the advantages due to reduced pressure, that is, reduction in process costs due to non-use of argon gas, can be realized.

Without wishing to be bound by theory, a lithium sulfide dried material obtains finally purified white lithium sulfide powder by removing residual solvents such as ethanol through heat treatment. At this time, when ethanol and decomposition gases derived therefrom are not smoothly discharged during the heat treatment, surface soot may occur due to carbonization.

Accordingly, conventionally, in order to suppress surface soot caused by the carbonization, a large amount of argon gas had to be injected during the heat treatment process. However, since the method for manufacturing lithium sulfide powder according to the present invention performs heat treatment under reduced pressure, there is an advantage that the argon gas may not be used.

In another embodiment of the present invention, the step of heat-treating the lithium sulfide precursor powder under reduced pressure may be a step of removing the ethanol included in the lithium sulfide precursor powder.

The step of heat-treating the lithium sulfide powder under reduced pressure according to the present invention does not use argon gas.

In another embodiment of the present invention, the step of heat-treating the lithium sulfide precursor powder under reduced pressure may include: first heat-treating the lithium sulfide precursor powder under reduced pressure at a temperature of 50°C to 200°C; and second heat-treating the first reduced-pressure heat-treated lithium sulfide precursor powder under reduced pressure at 700°C to 1,000°C.

When the step of heat-treating the lithium sulfide precursor powder under reduced pressure is performed in two steps as described above, carbonization caused by ethanol and organic decomposition products derived from ethanol is suppressed as much as possible, and thus it is preferable because there is an advantage of obtaining lithium sulfide powder having a low impurity content.

The first reduced-pressure heat-treating step may be performed to remove remaining ethanol and organic decomposition products derived from ethanol as much as possible at a relatively low temperature.

The first reduced-pressure heat treatment may preferably be performed at a temperature of 100°C to 200°C, more preferably at a temperature of 100°C to 150°C, for 2 hours to 5 hours, but is not limited thereto. However, when the first reduced-pressure heat treatment is performed within the above range, it is preferable because the removal rate of the ethanol and the organic decomposition products derived from the ethanol is excellent while the reduced-pressure heat treatment time is minimized.

The second reduced-pressure heat-treating step may be performed to increase crystallinity of the first reduced-pressure heat-treated material, and at the same time, to prevent substances derived from a very small amount of residual ethanol from being generated as impurities such as LiOH or Li₂CO₃.

The second reduced-pressure heat treatment may preferably be performed at a temperature of 700°C to 900°C, more preferably at a temperature of 800°C to 900°C, for 1 hour to 3 hours, but is not limited thereto.

When the second reduced-pressure heat treatment is performed within the above range, it is preferable because lithium sulfide having low impurities and high crystallinity can be manufactured while minimizing the reduced-pressure heat treatment time.

The first reduced-pressure heat treatment and the second reduced-pressure heat treatment may be performed as a continuous process. Specifically, the second reduced-pressure heat treatment may be performed as a continuous process in a furnace in which the first reduced-pressure heat treatment has been performed, but is not limited thereto.

The method for manufacturing lithium sulfide powder according to the present invention has an advantage that high-purity lithium sulfide can be easily manufactured through the step of heat-treating under reduced pressure even when there is a certain difference in lithium sulfide powder raw materials.

Hereinafter, preferred Examples and Comparative Examples of the present invention will be described. However, the following Examples are merely preferred embodiments of the present invention, and the present invention is not limited to the following Examples.

### Preparation Example

After 5.1 kg of graphite and 1.7 kg of lithium sulfate monohydrate were uniformly mixed with each other, the mixture was heated to 200°C at a rate of 5°C per minute under an inert gas (Ar) atmosphere. Then, the mixture was maintained at 200°C for 3 hours to remove water present in the mixture. Subsequently, when the mixture was heated to 900°C at a rate of 5°C per minute and thermally reduced at the same temperature for 2 hours, lithium sulfate was reduced to lithium sulfide and could be obtained in a state mixed with graphite.

Thereafter, the obtained mixture was naturally cooled under an inert gas atmosphere and then stored in a glove box. Then, the mixture was subdivided and used in all experiments of Examples and Comparative Examples.

Under an inert gas atmosphere, 0.7 kg of the thermally reduced product and 3 g of solid sulfur powder were introduced into a 20-L filtration reactor containing 5 L of ethanol and sufficiently stirred. At this time, the sulfur powder to be introduced is a process parameter for controlling the S/Li molar ratio of the lithium sulfide precursor powder obtained in a subsequent drying step. After stirring was stopped, when the mixed slurry was filtered, graphite not dissolved in ethanol remained in a wet state at an upper portion of the filtration reactor, and the remainder was obtained in a solution state in a 20-L glass flask under the filtration reactor. At this time, the color of the solution was transparent yellow.

Thereafter, the prepared filtrate was transferred to a 10-L round-bottom flask, the flask was mounted on a rotary evaporator, and then the solution was evaporated and concentrated using a vacuum pump to perform a drying process. The vacuum pressure started from an initial pressure of 350 mbar, was lowered to 100 mbar within 30 minutes, and drying was performed for 2 hours or 3 hours. Depending on the drying time, the ethanol content in the dried precursor powder varies. During drying, dried lithium sulfide precursor powder was obtained using an external thermostatic water bath at a temperature of 60°C.

### Examples 1 and 2

The lithium sulfide precursor powder manufactured according to the Preparation Example was heat-treated under reduced pressure under the conditions shown in Table 1 to obtain lithium sulfide powder. Specifically, heat treatment was performed in two steps. In order to remove remaining ethanol and organic decomposition products derived from ethanol, after maintaining the powder as a first reduced-pressure heat treatment at 100°C and 150°C for 5 hours (Example 1) and 2 hours (Example 2), respectively, finally, as a second reduced-pressure heat treatment, the powder was heat-treated at 800°C for 2 hours to obtain lithium sulfide powder. The temperature increase rate for heat treatment was 5°C/min.

### Comparative Examples 1 and 2

In order to determine the effect of the S/Li molar ratio of the precursor powder, lithium sulfide powder was obtained by the following method. The procedure of the manufacturing process for obtaining lithium sulfide powder from thermal reduction of lithium sulfate was performed in the same manner as described above in the Preparation Example and Examples. However, in the step of introducing the thermally reduced product and solid sulfur powder into ethanol to extract lithium sulfide in a solution phase, the process was performed by varying the amount of sulfur powder introduced to 2 g and 3 g, respectively.

### Experimental Example

Analysis results of the lithium sulfide precursor powder manufactured according to the Preparation Example and lithium sulfide powders manufactured according to the Examples and Comparative Examples are shown in Table 1 below.

At this time, the ethanol content was measured using an SDT Q600 thermogravimetric analyzer (TGA) manufactured by TA Instruments, and the S/Li molar ratio of the lithium sulfide precursor powder was measured using a SpectroArcos inductively coupled plasma optical emission spectrometer (ICP-OES) manufactured by Spectro Ametek. In the case of the optical emission spectroscopy, in order to accurately measure the amount of the corresponding element in the precursor powder, the powder was pretreated with a hydrogen peroxide solution in an aqueous solution state, and then the analysis was performed.

The crystal phase of the manufactured lithium sulfide powder was analyzed using an X-ray diffractometer of D/MAX 2500 equipment manufactured by Rigaku, and the impurity content ratio was measured through this. The oxygen and carbon contents were measured using an elemental analyzer manufactured by Leco, and the results are shown in Table 1 below. At this time, in the impurity content ratio, H% is a value expressed as a relative ratio of the intensity of a main diffraction peak line of Li₂O with respect to 100% of the intensity of a main diffraction peak line of Li₂S in XRD analysis.

In addition, assuming that the oxygen content in lithium sulfide was entirely derived from the Li₂O crystal phase observed in the XRD analysis results, the wt% of Li₂O was calculated based on the molar concept.

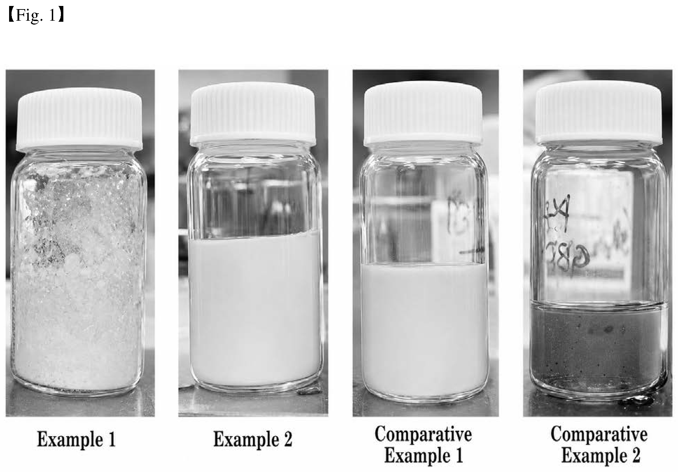

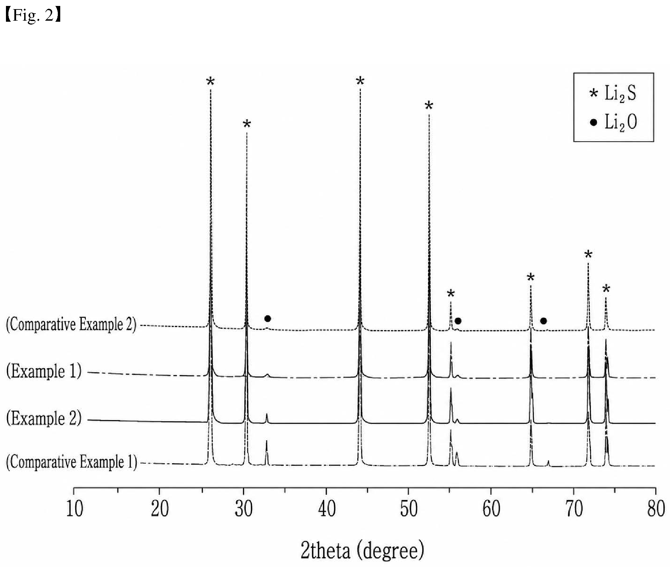

In addition, photographs of the manufactured lithium sulfide powder are shown in FIG. 1, and XRD analysis results of each powder are shown in FIG. 2.

**[Table 1]**

| | Lithium Sulfide Precursor Powder | | Heat Treatment Conditions | | | Lithium Sulfide Powder (Li₂S) Analysis | | | | |
|---|---|---|---|---|---|---|---|---|---|---|
| | S/Li Molar | Ethanol | Primary | Secondary | Reduced- | Content of Impurity | | Powder | Oxygen | Carbon |
| | Ratio (mol/mol) | Content (wt%) | Temperatu re (°C) | Temperatu re (°C) | Pressure Condition (mbar) | Li₂O(H%) | Li₂O(wt%) | Color | Content (wt%) | Content (wt%) |
| Example 1 | 0.475 | 60 | 100 | 800 | 13 | 0.4 | 0.8 | White | 0.41 | 0.12 |
| Example 2 | 0.477 | 46 | 150 | 800 | 23 | 1.4 | 1.5 | White or pale grayish | 0.82 | 0.11 |
| Comparative Example 1 | 0.458 | 63 | 150 | 800 | 23 | 3.5 | 4.5 | White or pale grayish | 2.4 | 0.10 |
| Comparative Example 2 | 0.492 | 61 | 150 | 800 | 13 | 0.3 | 0.6 | Dark gray | 0.33 | 1.5 |

Referring to Table 1 and FIGS. 1 and 2, the lithium sulfide powder manufactured according to the Examples has advantages in that the impurity content is very low and whiteness is excellent.

The present invention is not limited to the above embodiments and may be manufactured in various different forms. A person having ordinary skill in the art to which the present invention pertains will understand that the present invention may be embodied in other specific forms without changing the technical spirit or essential features of the present invention. Therefore, the above-described embodiments should be understood as illustrative in all respects and not restrictive.

## Claims

1. A lithium sulfide powder including, based on 100 wt% of the entirety, Li₂O in an amount of 2 wt% or less,
wherein an oxygen content in the lithium sulfide powder is 1 wt% or less, and
wherein a carbon content in the lithium sulfide powder is 0.15 wt% or less.

2. The lithium sulfide powder of claim 1,
wherein the Li₂O is included in an amount of 1.5 wt% or less based on 100 wt% of the entire lithium sulfide powder.

3. The lithium sulfide powder of claim 1,
wherein the oxygen content in the lithium sulfide powder is 0.85 wt% or less.

4. The lithium sulfide powder of claim 1,
wherein the carbon content in the lithium sulfide powder is 0.12 wt% or less.

5. A method for manufacturing a lithium sulfide powder, comprising:
preparing a lithium sulfide precursor powder including ethanol in an amount of 60 wt% or less based on 100 wt% of the entirety; and
heat-treating the lithium sulfide precursor powder under reduced pressure.

6. The method for manufacturing a lithium sulfide powder of claim 5,
wherein the heat-treating of the lithium sulfide precursor powder under reduced pressure comprises:
first heat-treating the lithium sulfide precursor powder under reduced pressure at a temperature of 50°C to 200°C; and
second heat-treating the first reduced-pressure heat-treated lithium sulfide precursor powder under reduced pressure at 700°C to 1,000°C.

7. The method for manufacturing a lithium sulfide powder of claim 5,
wherein the heat-treating of the lithium sulfide precursor powder under reduced pressure is performed at a pressure of 10 to 25 mbar.

8. The method for manufacturing a lithium sulfide powder of claim 7,
wherein the heat-treating of the lithium sulfide precursor powder under reduced pressure is performed at a pressure of 13 to 23 mbar.

9. The method for manufacturing a lithium sulfide powder of claim 5,
wherein the heat-treating of the lithium sulfide precursor powder under reduced pressure is a step of removing the ethanol included in the lithium sulfide powder.

10. The method for manufacturing a lithium sulfide powder of claim 6,
wherein the first reduced-pressure heat treatment is performed at a temperature of 100°C to 150°C.

11. The method for manufacturing a lithium sulfide powder of claim 6,
wherein the second reduced-pressure heat treatment is performed at a temperature of 700°C to 900°C.

12. The method for manufacturing a lithium sulfide powder of claim 6,
wherein the first reduced-pressure heat treatment is performed for 2 hours to 5 hours.

13. The method for manufacturing a lithium sulfide powder of claim 6,
wherein the second reduced-pressure heat treatment is performed for 1 hour to 3 hours.

14. The method for manufacturing a lithium sulfide powder of claim 5,
wherein, in the preparing of the lithium sulfide precursor powder, a molar ratio of S/Li in the lithium sulfide precursor powder is 0.46 to 0.49.
